# EUROPEAN PATENT APPLICATION

(11) **EP 4 464 150 A1**
(43) Date of publication of application: **20.11.2024**
(21) Application number: 24171014.4
(22) Date of filing: 18.04.2024
(51) Int. Cl.: A01G 9/24, F21V 29/76

(54) **LUMINAIRE FOR PLANT CULTIVATION AREAS**

(71) Applicant: Blue Skies Group B.V., 5705 DE Helmond (NL)
(72) Inventor: MEEUWS, Gerardus Johannes Jozef Maria, 6029 PX Sterksel (NL); MEEUWS-ABEN, Cornelia Henrica Petronella Maria, 6029 PX Sterksel (NL); DONNER, Steven Friedrich Ludovicus, 5612 ND Eindhoven (NL)
(74) Representative: Frick, Robert

(57) **Abstract**

The invention relates to a luminaire (30) suitable for plant cultivation areas. The luminaire (30) comprises a luminaire body (31) made from a thermally conductive material, which comprises fins (32) for convective heat exchange with air and indentations (33) for mounting the luminaire body (31) on fluid pipes of a temperature control system of the plant cultivation area.

## Description

The present invention relates to a luminaire with hybrid heat exchange interfaces. The luminaire is suitable for use in plant cultivation spaces.

Plant cultivation spaces use artificial lighting and climate control to provide optimal growth conditions for plants. One aspect to be considered in the context of climate control is the dissipation of heat that is emitted from light sources.

The present invention aims to provide a luminaire that can easily be integrated into plant cultivation spaces and enables superior heat dissipation behavior and flexibility.

Against this background, the invention proposes a luminaire comprising a luminaire body made from a thermally conductive material and one or more light sources, wherein the luminaire body comprises a heat sink for convective heat exchange with air and an interface for mounting the luminaire body on and conducting heat to one or more pipes, wherein the heat sink comprises a plurality of fins and wherein the interface comprises one or more indentations.

The light sources are mounted to the luminaire body such as to emit light at a front side of the luminaire. The luminaire body may comprise a recess at its front side in which the light sources are arranged. The recess may be open or may be covered by a transparent cover. The recess may comprise optical elements, integral to the luminaire body or as separate parts, like reflectors or lenses, to manipulate the light emission from the light sources as needed.

In an embodiment, the luminaire body is a single-piece component. A single piece component from a thermally conductive material provides efficient heat conduction from the light sources to the heat sink and the interface.

In an embodiment, the thermally conductive material is a metal, preferably aluminum, copper or alloys comprising aluminum or copper. Metals with high thermal conductivity, such as aluminum, copper or their alloys, are frequently used due to their availability, mechanical stability, simple manufacturability, and relatively low cost. Thermally conductive polymers, including polymers comprising thermally conductive filling materials, can be suitable alternatives.

In one embodiment, the light sources are LED light sources. These light sources are known to be advantageous in many applications in view of their high efficiency and low emission of heat. The light sources may be configured to emit photosynthetically active radiation (PAR), which is usually defined as having a wavelength of between 400-700 nm, and may additionally comprise radiation outside that range.

In an embodiment, the heat sink is arranged on a back side of the luminaire body. This allows for a large dimensioning of the heat sink without obstructing light passage. The fins can be pin fins, straight fins, cross-cut fins or flaring fins.

The interface serves a double function of mounting the luminaire and enabling dissipation of heat to the one or more pipes. To arrange the luminaire in a plant cultivation space comprising a temperature control system, which comprises fluid pipes and a plurality of heat exchangers distributed in a plant cultivation space, the luminaire may be mounted on one or more of the fluid pipes, with the surfaces of the indentations serving as support surface. Fastening elements, integral to the luminaire or separate, can be used to secure the connection.

In an embodiment, the indentations are arranged at and/or open towards the front side of the luminaire body. This allows the luminaire to be placed on the fluid pipe(s) with its front side facing downwards.

In an embodiment, the indentations are channel-like. This allows large-area heat conductive contact with a correspondingly shaped surface of a pipe. The cross-section of the indentation(s) may be circular or oval shaped, depending on the cross-sectional shape of the target pipe. In a preferred embodiment, the interface may comprise two channel-like indentations, framing the light sources or a recess enclosing the light sources from two sides. This allows for a self-sufficient mounting of the luminaire to fluid pipe(s) of a temperature control system, without the need for additional support.

The surfaces of the indentations may be devoid of a coating or cover. Alternatively, the surfaces of the indentations may comprise a coating of a material that is highly thermally conductive material and softer than the material of the luminaire body. This may enhance thermal conduction between the pipe(s) and the luminaire body.

The invention further relates to an apparatus comprising a luminaire as described above and one or more fluid pipes of a temperature control system, wherein the luminaire is mounted to the fluid pipe(s).

Yet further, the invention relates to a system for cultivating a plurality of crops in a cultivation space, wherein the cultivation space extends over a length direction and the crops are distributed over the cultivation space in said length direction, wherein the system comprises a temperature control system with a plurality of heat exchangers, which are distributed over the cultivation space in said length direction, and one or more fluid pipes, connected to the heat exchangers, wherein the system further comprises a plurality of artificial light sources, which are likewise distributed over the cultivation space in said length direction, and wherein at least one of the artificial light sources comprises a luminaire as described above mounted to one or more of the fluid pipes.

The cultivation space is preferably daylight-free or substantially daylight-free. The temperature control system may be a cooling system, carrying heat exchange fluid having a temperature lower than the ambient temperature in the cultivation space, or a heating system, carrying heat exchange fluid having a temperature higher than the ambient temperature in the cultivation space, depending on the requirements of the cultivation space.

In the following, the invention is further described with reference to exemplary embodiments and accompanying figures. In the figures:
- Fig. 1: shows a schematic side view of a system for cultivating a plurality of crops in a cultivation space;
- Fig. 2: shows a perspective view of a luminaire according to a first embodiment of the invention;
- Fig. 3: shows a perspective view of a luminaire according to a second embodiment of the invention as mounted to a pair of fluid pipes; and
- Fig. 4: shows a schematic cross-section of a luminaire according to the invention.

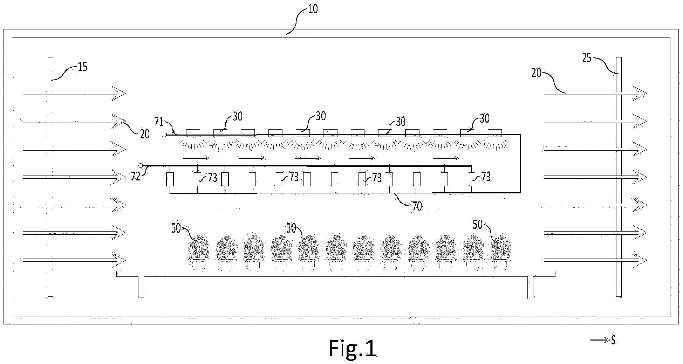

Fig. 1 shows a system for cultivating a plurality of crops in a cultivation space 10, in an exemplary embodiment.

The system comprises a fully conditioned cultivation space 10, in which a plurality of crops 50 are placed and in which specific conditions in terms of, inter alia, temperature can be controlled along a length direction S thereof. An air control system allows directing a substantially laminar airflow 20 through the cultivation space 10 in its length direction S, from an inlet plenum wall 15 to an outlet plenum wall 25.

A temperature control system 70 comprising supply fluid pipes 72, return fluid pipes 71 and a number of fluid heat exchangers 73 is comprised in the conditioned cultivation space 10 for temperature control.

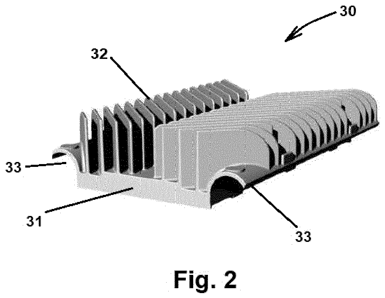

An array of luminaires 30 is provided above the crops, to emit photosynthetically active radiation (PAR) essential for photosynthesis and hence development of the crops 50. The light sources 30 are shown to be mounted to the return fluid pipes 71. In a different embodiment, they can also be mounted to the supply fluid pipes 72. In any case, the light sources are light sources according to the invention and will be further discussed with reference to Figs. 2-4.

Fig. 2 shows a perspective view of a luminaire 30 according to a first embodiment of the invention. The luminaire 30 comprises a luminaire body 31, which is a single-piece component made from a thermally conductive material like aluminum or copper.

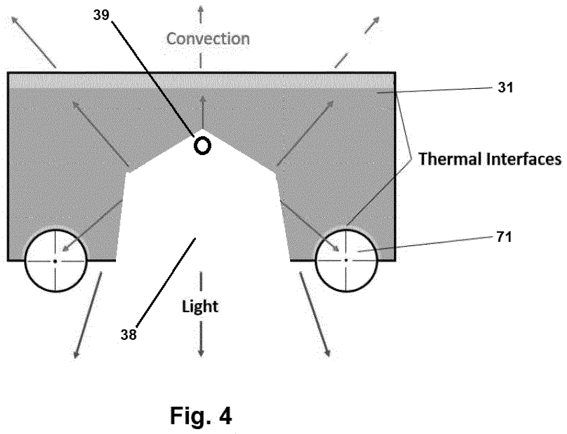

The luminaire body 31 comprises an array of fins 32 on its back side, more specifically an array of straight fins. The array of fins 32 serves to dissipate heat emitted from a light source 39 (not shown in Fig. 2, but only in Fig. 4) into the air 20 flowing through the cultivation space 10.

In addition, the luminaire body 31 comprises two channel-like indentations 33 that frame a recess 38 (not shown in Fig. 2, but only in Fig. 4) enclosing the light sources 39 on both sides and are open towards the front side of the luminaire body 31. The channel-like indentations 33 have a circular cross-section and serve as an interface for mounting the luminaire 30 to the fluid pipes 71 and to conduct heat to the fluid pipes 71 and ultimately a heat exchange fluid flowing through the fluid pipes 71.

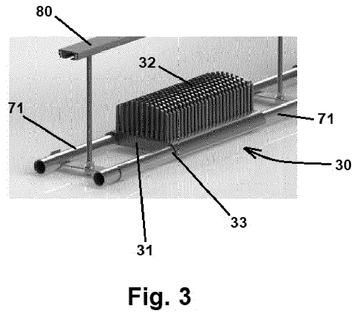

Fig. 3 shows a perspective view of a luminaire 30 according to a second embodiment of the invention as mounted to a pair of fluid pipes 71.

On the luminaire 30 itself, the only difference to the luminaire of Fig. 2 is the type of fins 32 on the back side, which is an array of pin fins instead of an array of straight fins.

The mounting of the luminaire 30 on the pair of fluid pipes 71 is such that the fluid pipes 71, which have a circular cross-section with an outer diameter identical to the inner diameter of the channel-like indentations 33, and which run in parallel, at the same vertical height and at a distance that corresponds to the distance between the two channel-like indentations 33 of the luminaire 30, are received in the channel-like indentations 33. Specifically, the luminaire 30 sits on the fluid pipes 71 and the indentations 33, which are open to the front side (downwards) of the luminaire 30, engage with the fluid pipes 71. This allows for an easy mounting on the fluid pipes at any longitudinal position thereof. Optional fastening elements (not shown) can be used to fix the luminaire 30 at a certain position.

As further shown in Fig. 3, the fluid pipes 71 are carried by a support structure 80, which can carry electricity and data cables for the LED light sources 39 or sensors.

Fig. 4 is a schematic cross-section of a luminaire 30 of the invention and representative of the embodiments of both Fig. 3 and 4.

The figures illustrates the light sources 39, which are mounted in a recess 38 and emit light at a front side (downwards) of the luminaire. The light sources are LED light sources that emit photosynthetically active radiation (PAR) having a wavelength of between 400-700 nm. The recess 38 is shown as an open recess in Fig. 4, but may also be covered by a transparent cover. It may comprise optical elements, like reflectors or lenses, as necessary to manipulate the light emission from the light sources 39.

## Claims

1. A luminaire comprising a luminaire body made from a thermally conductive material and one or more light sources, wherein the luminaire body comprises a heat sink for convective heat exchange with air and an interface for mounting the luminaire body on and conducting heat to one or more pipes, wherein the heat sink comprises a plurality of fins and wherein the interface comprises one or more indentations.

2. The luminaire of claim 1, wherein the light sources are mounted to the luminaire body such as to emit light at a front side of the luminaire.

3. The luminaire of claim 2, wherein the luminaire body comprises a recess at its front side in which the light sources are arranged.

4. The luminaire of any preceding claim, wherein the luminaire body is a single-piece component.

5. The luminaire of any preceding claim, wherein the thermally conductive material is a metal, preferably aluminum, copper or alloys comprising aluminum or copper.

6. The luminaire of any preceding claim, wherein the light sources are LED light sources.

7. The luminaire of any preceding claim, wherein the light sources are configured to emit photosynthetically active radiation (PAR) having a wavelength of between 400-700 nm.

8. The luminaire of any preceding claim, wherein the heat sink is arranged on a back side of the luminaire body.

9. The luminaire of any preceding claim, wherein the fins are pin fins, straight fins, cross-cut fins or flaring fins.

10. The luminaire of any preceding claim, wherein the indentations are arranged at and/or open towards the front side of the luminaire body.

11. The luminaire of any preceding claim, wherein the indentation(s) is/are channel-like.

12. The luminaire of claim 11, wherein the interface comprises at least two channel-like indentations, the two channel-like indentations framing the light sources or a recess enclosing the light sources from two sides.

13. The luminaire of claim 11 or 12, wherein the cross-section of the channel-like indentation(s) is circular or oval shaped.

14. An apparatus comprising a luminaire of any preceding claim and one or more fluid pipes of a temperature control system, wherein the luminaire is mounted to the fluid pipe(s).

15. A system for cultivating a plurality of crops in a cultivation space, wherein the cultivation space extends over a length direction and the crops are distributed over the cultivation space in said length direction, wherein the system comprises a temperature control system with a plurality of heat exchangers, which are distributed over the cultivation space in said length direction, and one or more fluid pipes, connected to the heat exchangers, wherein the system further comprises a plurality of artificial light sources, which are likewise distributed over the cultivation space in said length direction, and wherein at least one of the artificial light sources comprises a luminaire of any one of claims 1-13 mounted to one or more of the fluid pipes.
